# FASCICULE DE BREVET EUROPEEN

(11) **EP 0 866 410 B1**
(45) Date de publication et mention de la délivrance du brevet: **19.11.2008**
(21) Numéro de dépôt: 98400133.9
(22) Date de dépôt: 22.01.1998
(51) Int. Cl.: G06F 17/30

(54) **Système informatique à stockage de données distribué**
Rechnersystem mit verteiltem Datenspeicher
Computer system with distributed data storage

(30) Priorité: 24.01.1997 FR 9700757
(43) Date de publication de la demande: 23.09.1998
(73) Titulaire: Bull S.A.S., 78340 Les Clayes sous Bois (FR)
(72) Inventeur: Peping, Jacques, 95150 Taverny (FR)
(74) Mandataire: Pellegrini, Marie Claude

(56) Documents cités:
- EP-A- 0 747 840
- EP-A- 0 774 723
- WO-A-89/02631
- US-A- 5 367 698

## Description

La présente invention concerne un système informatique à stockage de données distribué.

Elle s'applique à un système informatique de traitement de données à architecture réseau et plus particulièrement à une architecture réseau du type dit "INTRANET', desservant une entreprise ou une organisation.

Il est généralement admis qu'un des facteurs clés de la bonne santé d'une entreprise ou d'une société est directement dépendant des informations qu'elle possède. Ce terme "informations" doit être compris dans son sens le plus général. Il s'agit d'informations internes à la société (prix de ventes de produits, gammes de fabrication, etc.) ou de provenance extérieure à celle-ci (données diverses sur la concurrence, de type commercial ou technique, etc.).

Dans l'état des techniques actuel, le traitement de ces informations fait naturellement appel à des systèmes informatiques de plus en plus puissants et complexes. La baisse rapide des prix du matériel, notamment des mémoires de masse (disques durs, unités de bandes magnétiques ou de cartouches, disques optiques) permet de stocker de plus en plus de données, en local ou dans des sites éloignés.

De plus en plus, les systèmes de traitement de données sont fédérés en réseaux. Parmi ceux-ci, on doit signaler le réseau "INTERNET' qui permet le dialogue entre des millions d'ordinateurs disséminés à travers le monde, y compris de simples micro-ordinateurs à usage domestique.

De la même façon, les sociétés utilisent des réseaux locaux spécifiques appelés "INTRANET', qui relient entre elles les différentes ressources informatiques d'un ou plusieurs sitesqui leur sont propres.

De ce fait, elles sont placées devant la nécessité urgente de maîtriser le flot croissant d'informations entrantes et, notamment, de les stocker en des "endroits" où elles peuvent être aisément accessibles, déplacées et administrées de façon la plus efficace possible, et ce au moindre coût.

Il est connu du document intitulé « Petal : Distributed Virtual Disks » de E.K. Lee et C.A. Thekkath publié dans le magazine ACM en Octobre 1996, pages 84 à 92, un système de stockage consistant en une collection de serveurs connectés en réseau gérant un ensemble de disques physiques. Cette collection apparaît comme des disques virtuels. Petal maintient un ensemble d'informations décrivant les entités courantes du système de stockage.

Il est, en outre, décrit dans le document intitulé « The Emergency Storage Management Paradigm » de S.S. Coleman et R.W. Watson publié au 12ème IEEE Symposium on Mass Storage Systems en pages 101 à 110, un ensemble de systèmes de gestion de stockage, notamment un serveur de stockage centralisé, des dispositifs de stockage connectés à un réseau, et un exemple de hiérarchie de dispositifs de stockage.

Enfin, le document US 5,367,698 décrit un système de stockage en réseau incluant un serveur de migration.

Ces données doivent également être protégées, dans le sens le plus large de ce terme. On utilise en général le concept connu sous le sigle "D.I.C.", pour Disponibilité, Intégrité, Confidentialité.

Il est en effet nécessaire d'assurer l'intégrité des données, que ce soit contre les défaillances des systèmes ou contre les actions malveillantes. Il est aussi nécessaire de prendre des mesures de "réservation", car certaines données peuvent être confidentielles, du moins à accès limité à des utilisateurs autorisés. Enfin, elles doivent être le plus disponible possible, ce qui implique notamment des mesures de sauvegarde ou une certaine redondance dans le stockage, pour pallier aux déficiences matérielles ou aux erreurs logicielles.

Enfin, il est nécessaire que, une fois le choix d'un système de stockage effectué, la pérennité du système soit assurée. Notamment, on doit pouvoir prendre en compte les technologies futures sans modifications importantes du système.

L'invention se fixe pour but un système visant à satisfaire les besoins évoqués.

Pour ce faire, elle consiste à assurer un stockage distribué des données mettant en oeuvre un adressage virtuel généralisé des ressources de stockage réparties dans un système informatique.

L'invention a donc pour objet un système informatique comprenant une pluralité de moyens de stockage de données distribués et au moins un serveur de stockage desdites données, caractérisé en ce qu'il comprend des moyens d'attribution à chacun desdits serveurs de stockage de données d'un espace mémoire virtuel dont l'étendue est au moins égale à la capacité cumulée de tout ou partie desdits moyens de stockage de données distribués.

Selon une variante de réalisation préférée de l'invention, le système comprend essentiellement des moyens d'administration centralisés et des moyens d'administration distribués associés à au moins une ressource de stockage du système informatique, ainsi qu'un bus de communication à grande vitesse reliant ces moyens d'administration distribués, entre eux, et avec les moyens centralisés.

L'invention sera mieux comprise et d'autres caractéristiques et avantages apparaîtront à la lecture de la description qui suit en référence aux figures annexées, parmi lesquelles:
- La figure 1 illustre schématiquement un exemple d'architecture de traitement de donnée de type réseau selon l'art connu ;
- la figure 2 est un chronogramme illustrant l'échange de données entre deux serveurs d'un tel réseau ;
- les figures 3a et 3b illustrent schématiquement une architecture de base fonctionnant suivant l'invention ;
- la figure 4 illustre schématiquement un exemple de réalisation d'une architecture d'un système informatique complet du type réseau conforme à l'invention ;
- la figure 5 illustre schématiquement une topologie de bus utilisée dans le système selon la figure 4 ;
- La figure 6 illustre l'échange de données entre deux unités de traitement de données particulières du système informatique de la figure 4 ;
- la figure 7 est un chronogramme illustrant l'échange de données entre les deux unités de la figure 6 ;
- la figure 8 illustre une variante du système selon l'architecture de la figure 4.

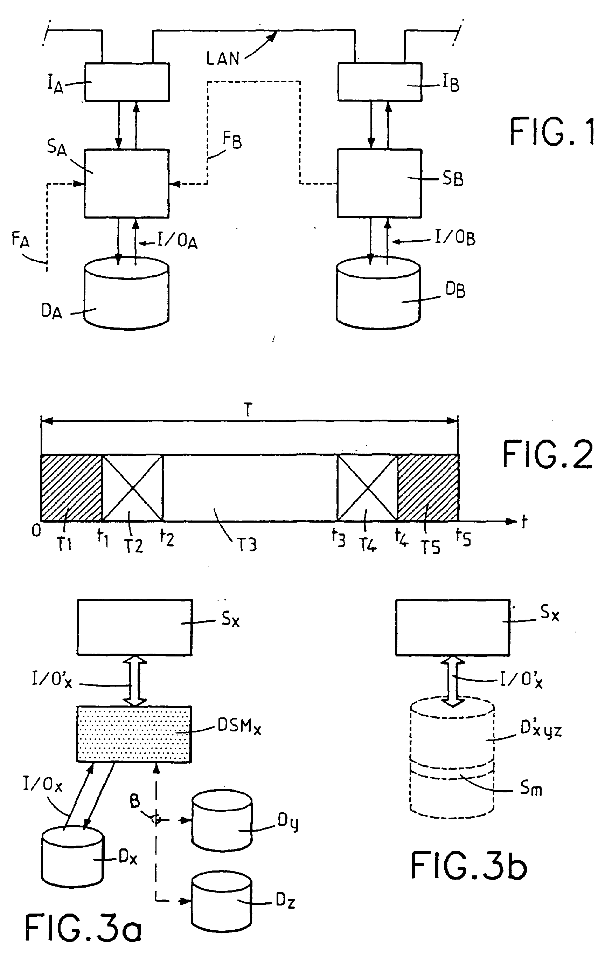

La figure 1 illustre un exemple d'architecture d'un système informatique de type réseau conforme à l'art connu. Pour simplifier le dessin, on n'a représenté que deux unités connectées à un réseau local du type "LAN" ("Local Aera Network"). Ce réseau peut être de tout type et de toute configuration : bus (par exemple du type "ETHERNET') ou en anneau (par exemple du type "TOKEN RING"). Sur la figure 1, on a supposé qu'il s'agissait de deux serveurs, S_{A} et S_{B}, respectivement. Le serveur SA pourrait être remplacé par une station de travail ou un simple micro-ordinateur. Ces serveurs, S_{A} et S_{B}, sont connectés physiquement au bus de type LAN via des interfaces classiques, I_{A} et I_{B}, qui dépendent de la nature du bus. Elles comprennent notamment des moyens de mémoire tampon et des moyens de codage et de décodage permettant, en particulier, de reconnaître une adresse de destination. On a supposé que chaque serveur était associé à des moyens de mémoire de masse, illustrés par les disques durs D_{A} ou D_{B}, connectés au serveur correspondant à l'aide de canaux d'entrée/sortie, I/O_{A} ou I/O_{B}, respectivement. Dans la suite du texte, pour simplifier, on désignera ce réseau par le sigle LAN.

Il existe deux méthodes principales d'échange de données.

En local, l'unité de traitement de données, par exemple le serveur S_{A}, qui veut accéder à des adresses de mémoire de son propre disque, D_{A}, en lecture ou en écriture, se sert d'instructions élémentaires agissant directement sur les têtes de lecture/écriture du disque. Ces instructions élémentaires sont du type "Entrée/Sortie" connues sous la dénomination anglo-saxonne "I/O Channel". On peut parler de protocole de type "adressage de mémoire". L'accès est quasi instantané. Il dépend des caractéristiques de l'unité de disque (vitesse d'accès moyen, débit, etc.) et du mode utilisé, celui-ci étant par exemple du type connu et standardisé (aussi bien à l'ANSI qu'à l'ISO) sous la dénomination "SCSI" pour "Small Computer System Interface". Sur la figure 1, on a illustré la lecture d'un fichier F_{A} à partir du disque D_{A}, selon ce mode d'échange de données. Les données relatives à ce fichier F_{A} sont lues directement sur des pistes et secteurs du disque B_{A}, à des adresses déterminées enregistrées dans une table d'allocation.

Par contre, si l'on désire lire des données, par exemple un fichier F_{B} stocké sur une unité de stockage externe, en l'occurrence le disque D_{B} attaché au serveur S_{B}, il est nécessaire de passer par le réseau LAN, les serveurs, S_{A} et S_{B}, et les interfaces, I_{A} et I_{B}. Le serveur S_{A} ne peut plus commander directement les têtes du disque dur D_{B}. Les échanges s'effectuent selon un mode de communication par paquets de données, faisant usage de messages et mettant en oeuvre un protocole particulier propre au type de réseau local utilisé.

Le chronogramme de la figure 2 illustre schématiquement un tel échange de données par le réseau LAN. Le temps total nécessaire à un échange d'un paquet de données élémentaires est au moins égal à l'intervalle de temps T, qui se décompose en intervalles de temps élémentaires T₁ à T₅. L'intervalle de temps T₁, entre les instants arbitraires t=0 et t=t₁, correspond au temps de traitement dans le serveur S_{B}. L'intervalle de temps T₂, entre les instants t=t₁ et t=t₂, correspond aux pertes de temps dues au protocole de communication particulier utilisé et aux conditions de transmission instantanées régnant sur le réseau (charge, nombres d'unités connectées, etc.). L'intervalle de temps T₃, entre les instants t=t₂ à t=t₃, représente le temps de transmission. Il dépend essentiellement de la distance entre deux stations connectées (éloignement des serveurs SA et S_{B} dans l'exemple), du débit de la liaison et, à un degré moindre, de la nature physique de la liaison (vitesse de propagation des signaux). De nouveau, l'intervalle de temps T₄, entre les instants t=t₃ et t=t₄, représente la contribution du protocole de communication (à l'arrivée). Enfin, l'intervalle de temps T₅, entre les instants t=t₄ et t=t₅, représente le temps de traitement à l'arrivée.

On conçoit aisément que ce mode d'échange est beaucoup plus lent que le mode précédent. Outre les données utiles (par exemple celles relatives au fichier F_{B}), des données supplémentaires doivent être transmises, notamment des données propres au protocole et des données d'adresses (origine et cible). Pour tenir compte des erreurs, il est également nécessaire de transmettre des données redondantes (parité, codes de détection et/ou de correction d'erreur). En outre, il est nécessaire de tenir compte des contentions et des collisions possibles, sur le bus ou l'anneau, selon les cas. Pour pallier à ces problèmes, des méthodes particulières telles que "CSMA/CD", de l'anglo-saxon "Carrier Sense Multiple Access / Collision Detection" ou "Ecoute Porteuse, Accès Multiples / Détection Colision" ont été proposées; elles font l'objet des recommandations de la norme IEEE 802.3. Ces phénomènes contribuent également à augmenter le temps moyen de transmission.

Selon une caractéristique principale de l'invention, on fait appel à un stockage distribué des données d'informations sur les différentes ressources de stockage d'un système informatique. Pour ce faire, on attribue à chaque serveur un espace mémoire virtuel de très grande capacité, incorporant son ou ses propres disque(s), s'il(s) existe(nt), et des disques externes et/ou d'autres ressources de stockage de données. Le serveur précité est alors à même d'adresser directement la totalité de l'espace mémoire virtuel qui lui est attaché, par des instructions du type "I/O channel" précédemment décrit. En d'autres termes, il commande des têtes de lecture/écriture virtuelles.

Les figures 3a et 3b illustrent schématiquement l'architecture de base conforme à l'invention.

Sur la figure 3a, un serveur Sₓ, qui peut par ailleurs être connecté au réseau local LAN (figure 1), est associé comme précédemment à une unité locale de stockage de données, par exemple un disque Dₓ. Selon un aspect important de l'invention, le serveur communique avec le disque au travers d'une unité physique ou logique DSMₓ, qui constitue les moyens d'administration distribués du système selon l'invention.

Dans le premier cas, quand l'unité DSMₓ est du type physique, il s'agit de circuits de traitement de données à programme enregistré connectés physiquement au disque Dₓ, par un canal d'entrée/sortie I/Oₓ, et à des disques externes, par exemple aux disques D_{y} et D_{z}, par un système de bus B spécifique qui sera détaillé ci-après. Ce bus B permet de transmettre des instructions de type "I/O Channe également aux disques D_{y} et D_{z} précités. Un programme spécifique, enregistré dans l'unité physique DSMₓ, d'un type appelé ici "agent intelligent", permet ce fonctionnement particulier. A titre d'exemple non limitatif, l'unité DSMₓ peut être constituée par une station de travail intermédiaire fonctionnant sous le système d'exploitation "UNIX" (marque déposée).

Dans le second cas, quand l'unité DSMₓ est du type logique, le programme précité est directement enregistré dans la mémoire vive du serveur Sₓ, et c'est ce dernier qui est physiquement connecté aux différents disques, Dₓ à D_{z}, le serveur jouant son rôle propre et celui des moyens d'administration distribués (DSMₓ). Il s'agit donc d'une unité purement logique, intégrée à la station de travail Sₓ.

Dans une autre variante de réalisation, l'unité logique peut être intégrée directement dans les circuits électroniques associés aux ressources de stockage, par exemple dans le contrôleur, s'il s'agit d'un disque.

Comme illustré plus particulièrement par la figure 3b, le serveur Sₓ "voit" l'ensemble des disques Dₓ à D_{z} comme un seul disque virtuel, D'_{xyz}, de grande ou très grande capacité. En l'occurrence, sa capacité est au moins égale à la capacité cumulée des disques Dₓ à D_{z}. Naturellement, la capacité totale du disque virtuel doit être dimensionnée de façon à être adaptée à l'espace disque maximum adressable par l'unité arithmétique et logique du serveur Sₓ. Il s'ensuit que le serveur Sₓ adresse directement des pistes ou secteurs Sₘ du disque virtuel précité D'xyz, comme si ce disque était un disque local. Il envoie des instructions de déplacement de têtes virtuelles et des ordres élémentaires d'écriture et lecture comme pour un disque local, selon le mode de fonctionnement "I/O Channel" précité.

Comme il sera détaillé ultérieurement, dans un mode préféré de l'invention, plusieurs type "d'agents intelligents" sont mis en oeuvre. Pour les besoins d'adressage précités, on peut appeler ces agents particuliers "agents de stockage". Il s'agit de pièces de programme chargées dans une mémoire vive de l'unité physique DSMₓ, ou alternativement du serveur Sₓ lorsque DSMₓ est une unité logique intégrée dans le serveur Sₓ.

Le rôle de ces programmes élémentaires est double :
a/ aiguillage vers une unité de stockage particulière, soit locale, par exemple Dₓ, soit distante, par exemple D_{y} et/ou D_{z}, selon la piste virtuelle adressée et :
b/ adaptation éventuelle du mode d'adressage et traduction de protocole, en fonction de l'unité physique réelle, D_{y} et D_{z}.

En effet, selon un aspect avantageux de l'invention, le serveur Sₓ peut adresser des unités de stockage hétérogènes (technologies et/ou constructeurs différents, mode de fonctionnement différents, etc.). A titre d'exemple non limitatif, le disque Dₓ pourrait être un disque mémorisant des mots codés "ASCII" ("American Standard Code for Information Interchange") de longueur 32 bits, le serveur Sₓ fonctionnant sous le système d'exploitation "UNIX" et les disques D_{y} et D_{z}, étant des disques attachés à un ordinateur de grande puissance dit "Main Frame", mémorisant des mots codés "EBCDIC" ("Extended Binary Coded Decimal Interchange Code") de longueur 36 bits.

L'unité physique DSMₓ ou son équivalent logique, si elle est intégrée dans le serveur Sₓ, rend les opérations d'adressage du disque D'_{xyz} entièrement transparentes, que ce soit le disque local Dₓ ou les disques externes D_{y} ou D_{z} qui stockent physiquement l'information. De façon plus précise, c'est l'agent intelligent spécialisé enregistré, ou agent intelligent de stockage, dans ce cas précis, qui accomplit cette tâche. Le serveur Sₓ adresse le disque virtuel D'_{xyz} par l'intermédiaire d'un canal d'entrée-sortie virtuel I/O'ₓ, comme si c'était son propre disque local Dₓ et selon le ou les seul(s) protocole(s) qu'il "connaît", par exemple celui associé au disque local Dₓ.

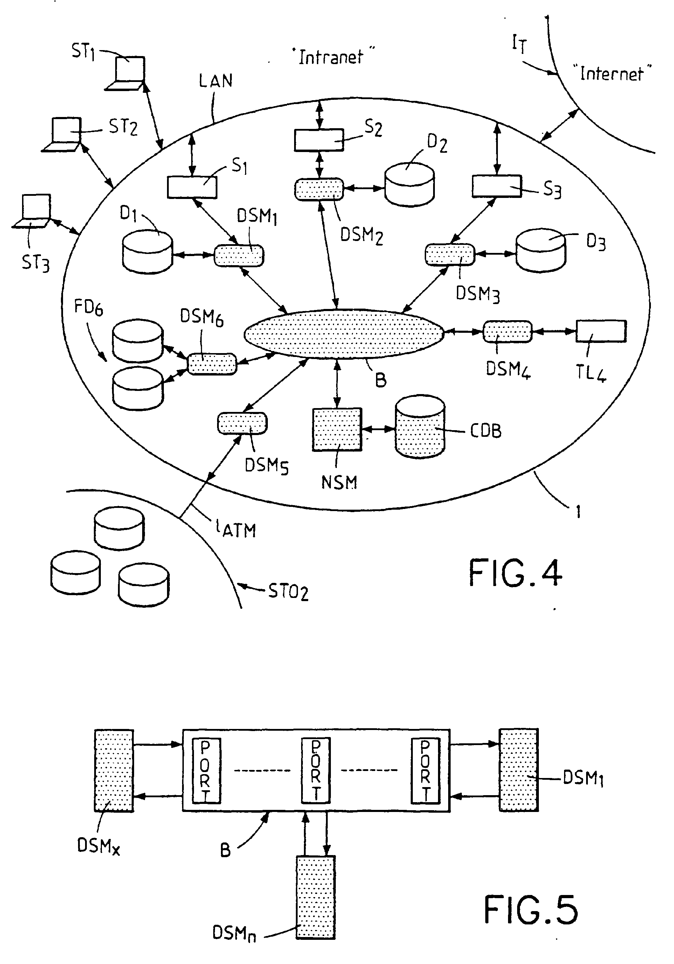

La figure 4 illustre schématiquement un exemple de système d'informatique 1 à architecture réseau, incluant des dispositions propres à l'invention (représentées en grisé sur la figure).

On suppose que le réseau local LAN est du type "INTRANET". Ce type de réseau intègre, en local, les technologies propres au réseau "INTERNET". Ce réseau comprend des serveurs faisant appel au protocole de communication de base connu sous le sigle "TCP/IP". Il inclut aussi d'autres protocoles de communication tels que "HTTP", "NFS", etc, également utilisés sur le réseau "INTERNET". Tous ces protocoles sont normalisés.

On a d'ailleurs supposé que le réseau local LAN communique avec le réseau "INTERNET' I_{T}, par exemple par l'intermédiaire de l'un des serveurs énumérés ci-dessous.

A ce réseau local LAN sont connectés, d'une part des stations de travail, ST₁ à ST₃, d'autre part des serveurs de stockage S₁ à S₃, dans l'exemple décrit. Ces serveurs de stockage, S₁ à S₃, seront appelés dans ce qui suit "serveurs", par esprit de simplification.

Selon l'une des caractéristiques principales de l'invention, les ressources de stockage, attachées à chaque serveur, S₁ à S₃, le sont via une unité d'administration distribuée, physique ou logique, DSM₁ à DSM₃. Dans l'exemple décrit, il s'agit de deux unités de disques classiques, D₁ à D₃.

Le système informatique 1 peut comprendre d'autres unités de stockage, telles qu'une librairie de bandes magnétiques ou de cartouches magnétiques, TL₄, qu'un ensemble de disques, FD₆, appelé "ferme de disques" ("Disk Farms", selon l'appellation anglo-saxonne généralement utilisée), ou encore que des ressources de stockage éloignées, représentées sous la référence générale STOₑ. Ces ressources de stockages sont gérées également par des unités d'administration qui leur sont affectées, DSM₄, DSM₆ et DSM₅, respectivement. La ressource de stockage éloignée, STOₑ, communique avantageusement avec l'unité DSM₅, via une liaison, I_{ATM}, en mode "ATM" (de l'anglo-saxon "Asynchronous Transfer Mode", ou "Mode de Transfert Asynchrone").

Selon un autre aspect de l'invention, les différentes unités d'administration distribuées, DSM₁ à DSM₆, sont connectées entre elles via un bus B à très grande vitesse. Elles sont également reliées, toujours via ce bus B, à une unité d'administration centralisée NSM.

Cette dernière unité, NSM, qui peut être constituée à base d'une station de travail, par exemple fonctionnant sous le système d'exploitation "UNIX", comprend des moyens de mémoire, par exemple un disque, emmagasinant une base de données CDB. Ces données comprennent la description du système, et notamment de toutes les ressources de stockage et de leurs caractéristiques (capacité, mode de fonctionnement, protocoles, etc.). Elle comprend également des données décrivant l'affectation de ces ressources de stockage aux différents serveurs, S₁ à S₃, du système informatique 1. Il doit être clair que chaque ressource de stockage, et plus particulièrement la librairie de bandes magnétiques, TL₄, la "ferme de disques", FD₆, et/ou les ressources de stockage éloignées, STOₑ, peut être partagée entre plusieurs serveurs, S₁ à S₃. Ce partage peut s'effectuer sur une base dynamique, en ce sens qu'il n'est pas figé une fois pour toutes et/ou qu'il dépend des applications en cours de traitement. La librairie de bandes ou de cartouches magnétiques peut notamment servir à des opérations de sauvegarde périodiques de tout ou partie des données enregistrées sur les disques du système 1, disques attachés directement ou indirectement à un ou plusieurs serveurs, S₁ à S₃.

A partir des données précitées de la base de données enregistrée CDB, l'unité d'administration centralisée NSM élabore de façon connue les programmes spécialisés précités, ou "agents intelligents". Pour ce faire, selon un aspect avantageux de l'invention, on met à profit une technologie de programmation du type "JAVA-Applets", par ailleurs utilisée en conjonction avec le réseau "INTERNET'. Il s'agit d'un langage orienté objet et d'un environnement de type "run-time", c'est-à-dire dont les programmes peuvent s'auto-exécuter à réception sur l'unité cible. En effet, l'exécution de ces programmes ne dépend pas de l'environnement de réception (système d'exploitation sous "UNIX", "WindowsNT", "Windows 95", [marques déposées], etc.). On parle de "Machine Virtuelle JAVA". Les applications "JAVA" peuvent donc s'exécuter sur toutes les unités où un logiciel "Machine Virtuelle JAVA" est implanté. L'exécution des programmes est donc indépendante de la plate-forme utilisée. Enfin, les communications s'effectuent en mode "Client - Serveur".

L'invention tire partie de ces caractéristiques avantageuses. Les "agents intelligents" sont programmés en langage "JAVA" et transmis dynamiquement et sélectivement, via le bus à haut débit B, aux différentes unités d'administration distribuées, DSM₁ à DSM₆, qu'elles soient physiques ou logiques (c'est-à-dire, dans ce dernier cas, confondues avec les serveurs). A réception, les programmes s'auto-exécutent dans les unités DSM₁ à DSM₆. Cette exécution se traduit pratiquement par le téléchargement et la mémorisation d'instructions en mémoire vive de ces unités (ou des serveurs lorsque les unités DSM₁ à DSM₆ sont logiques).

Ces instructions attribuent notamment, à un instant donné, un espace mémoire virtuel (par exemple, figure 3b : D'_{xyz}) au serveur (par exemple Sₓ) associé à une unité d'administration distribuée donnée (par exemple DSMₓ).

Lorsqu'un serveur, par exemple S₁, émet une requête pour la lecture et/ou l'écriture de données dans l'espace mémoire virtuel qui lui est attribué, l'unité d'administration distribuée adresse, sous la commande des instructions téléchargées, soit le disque local D₁, soit un disque externe, par exemple D₃. Dans tous les cas, l'adressage est effectué en mode "I/O Channel" et non sous la forme d'un protocole de communication, à l'aide de messages. Pour le disque local, D₁, le protocole d'adressage est celui utilisé par le serveur S₁. Pour le disque externe, D₃, l'adressage s'effectue par ce même protocole, via le bus B et l'unité d'administration distribuée, DSM₃, associée au disque D₃. Cette dernière unité, DSM₃, doit éventuellement traduire le protocole d'adressage de la manière décrite, de façon à s'affranchir des hétérogénéités des matériels utilisés. L'opération d'adressage finale, c'est-à-dire la commande des têtes de lecture-écriture du disque physique D₃, est effectuée sous la commande des instructions téléchargées et mémorisées dans l'unité d'administration distribuée DSM_{3.} Ces instructions sont issues, comme précédemment, de l'auto-exécution dans DSM₃ d'un "agent intelligent de stockage" transmis par l'unité d'administration centralisée NSM.

On doit comprendre également qu'une requête d'écriture et/ou de lecture, par un serveur, dans son espace disque virtuel, peut se traduire physiquement, en bout de chaîne, par la lecture ou l'enregistrement de données sur un autre support, une bande ou une cartouche magnétique par exemple. C'est le cas d'une requête lancée par le serveur S₂ par exemple, qui aboutirait à l'unité DSM₄ et à la librairie de bandes magnétiques TL₄. Le changement fondamental du type d'adressage qui en résulte reste transparent pour le serveur S₃. Ce sont les instructions téléchargées et mémorisées dans DSM₄ qui effectuent les traductions de protocoles et adaptations nécessaires. Il est clair que, dans ce cas, DSM₄ n'étant pas connectée à un serveur, il ne peut s'agir que d'une unité physique et non logique.

Pour que le système puisse remplir les exigences du procédé de l'invention, il est nécessaire que le bus B accepte un protocole du type "I/O Channel" précité. En d'autres termes, les échanges sur le bus ne s'effectuent pas selon un protocole de type communication.

Pour ce faire, selon un aspect de l'invention on choisit un bus au standard dit "Fibre Channel" qui a fait l'objet de normes (ANSI X3.230, de 1994). Ce type de bus est encore appelé "Fibre Backbone", selon la terminologie anglo-saxonne. Il s'agit d'un bus pouvant véhiculer des données à très haut débit. Le but principal assigné à un tel bus est de transmettre les données d'un point à un autre sous un temps d'attente très faible. Seule une correction d'erreur simple est effectuée, ce par le matériel et non par le logiciel. Les données sont transmises dans les deux directions, simultanément. Lorsqu'une transmission échoue pour cause de congestion, elle est ré-initiée immédiatement sans intervention logicielle. Enfin, ce type de bus est compatible avec les protocoles de haut niveau tels "SCSI" précédemment signalé. Il permet donc de véhiculer des requêtes de type "I/O Channel".

Il existe trois topologies de bus possibles : du type "Point-à-Point", du type dit "Switched Fabric" et du type "Anneau avec arbitrage" ("Arbitred Loop"), similaire aux anneaux "à jetons" ("TOKEN RING").

Dans le cadre de l'invention, on choisit de préférence la seconde topologie, qui offre la plus grande capacité de connexion. La figure 5 illustre schématiquement une telle topologie. Selon cette topologie, chaque dispositif, c'est-à-dire selon l'invention chacune des unités d'administration distribuées, DSM₁, ..., DSMₙ à DSMₓ, et centralisée, NSM, est connecté à un commutateur et reçoit une voie de données non bloquante pour n'importe quelle autre connexion sur le commutateur. Cette disposition est équivalente à une connexion dédiée avec n'importe quelle autre unité. Quand le nombre d'unités augmente et occupe une multitude de commutateurs, ces commutateurs sont à leur tour connectés entre eux. Il est recommandé d'établir des voies de connexion multiples entre commutateurs pour créer une redondance de circuits et augmenter la bande passante totale.

Bien que le standard prévoie la possibilité d'utiliser différents supports physiques pour réaliser les liaisons (paire torsadée, câble coaxial miniature ou vidéo, fibre optique multimode ou monomode), on choisit, dans le cadre de l'invention, la fibre monomode. Ce type de support permet, à la fois un très haut débit (100 MO/s) et des liaisons à grande distance (jusqu'à 10 km).

Les choix ci-dessus permettent donc d'établir des liaisons allant typiquement de 10 m à 10 km, pour des débits allant jusqu'à 100 MO/s, et pouvant accepter des centaines de connexions en parallèle aux débits précités. Enfin, le bus B est compatible avec de nombreux protocoles, qu'ils soient de type communication comme le protocole "TCP/IP" ou de haut niveau du type "I/O Channel" ("SCSI" par exemple). Le bus B est équivalent à une multitude de ports de tye "I/O Channel".

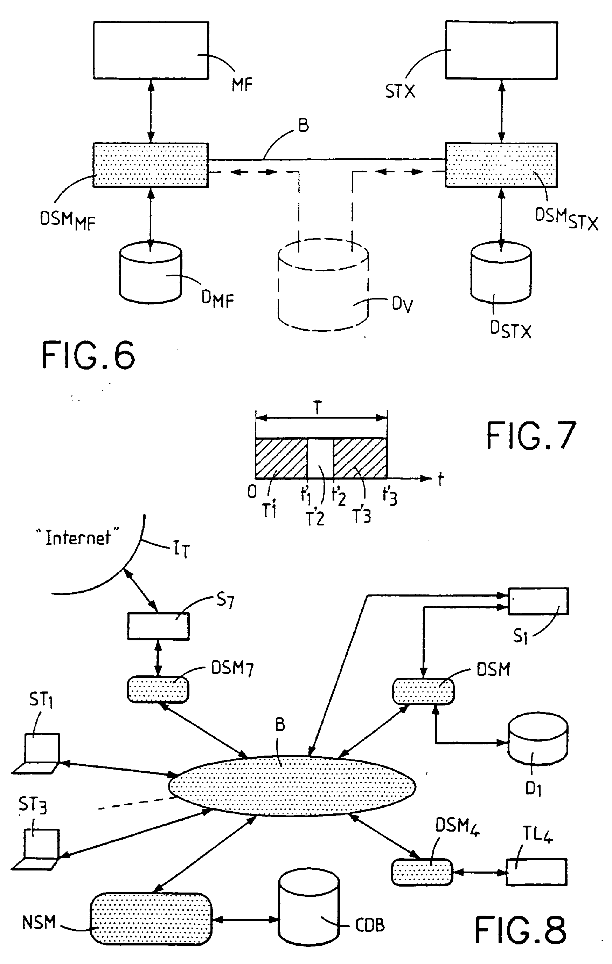

Ceci permet de réduire très significativement le temps nécessaire aux échanges de données entre deux serveurs, dans un rapport typique de un à dix. La figure 6 illustre schématiquement des échanges de données entre deux serveurs : un ordinateur MF du type "Main Frame" et une station de travail STX fonctionnant sous le système d'exploitation "UNIX". Selon la caractéristique principale de l'invention, les disques durs locaux, D_{MF} et D_{STX}, respectivement, sont attachés aux serveurs via des unités d'administration distribuées, DSM_{MF} et DSM_{STX}, respectivement. On suppose que les deux disques sont partagés entièrement entre les deux serveurs. Chaque serveur voit donc l'espace disque total comme un seul disque virtuel DV de capacité égale à la somme des deux disques.

On suppose que l'un des serveurs émet une requête, par exemple que le serveur MF émet une requête d'écriture ou de lecture de données, sur le disque virtuel D_{V}. Cette requête est transmise à l'unité DSM_{MF} pour exécution. Si l'espace disque physique concerné n'est pas dans l'espace disque local D_{MF}, la requête va être transmise à l'unité DSM_{STX}, via le bus B. Celle-ci va, dans l'exemple précis, effectuer deux opérations : traduction de protocoles (puisque, comme indiqué précédemment, les modes d'enregistrement de données sont différents sur les deux disques : "EBCDIC" et "ASCII" respectivement, largeurs de mots différents) et adressage physique du disque D_{SXT} à partir de l'adresse virtuelle transmise.

Le chronogramme de la figure 7 détaille le temps nécessaire à l'échange précité. L'intervalle de temps total T' ne comporte plus que trois phases : deux phases extrêmes de traitement : T'₁ et T'₃, entre les instants respectifs t=0 et t=t'₁, d'une part, et t=t'₂ et t=t'₃, d'autre part, et une phase de transmission via le bus B : T'₂, entre les instants t=t'₁ et t=t'₂.

Les intervalles de temps T'₁ et T'₃ doivent être comparés aux intervalles de temps T₁ et T₅ de la figure 2 (art connu). A priori, pour des matériels et des traitements/applications donnés identiques, ces intervalles de temps sont égaux. Ils ne dépendent que des conditions locales de traitement de l'information et en aucune façon des protocoles de transmission, ni du temps de transmission.

Par contre, il n'y a plus, contrairement à l'art connu, de pertes de temps en relation avec le protocole de communication : intervalles de temps T₂ et T₄ (figure 2). Ceci est dû aux propriétés du bus B, qui est compatible avec les protocoles de haut niveau ("SCSI" par exemple). Enfin, puisque l'on utilise un bus à très haut débit et la topologie dite "Switched Fabric", le temps de transmission est réduit à son strict minimum. L'intervalle de temps T'₂ est donc très inférieur à l'intervalle de temps homologue T₃ (figure 2).

L'intervalle de temps total T' nécessaire à un échange se réduit donc essentiellement aux intervalles de temps de traitement en local et devient pratiquement indépendant des transmissions entre unités. En d'autres termes, les échanges entre une ressource de stockage locale et un serveur, ou entre une ressource de stockage externe et ce même serveur, s'effectuent à une vitesse, sinon identique, du moins très comparable. Les performances du système ne sont donc pas dégradées, quelle que soit la localisation de la ressource de stockage de données. En d'autres termes encore, n'importe quel serveur, S₁ à S₃ (figure 4), du système informatique 1, peut, a priori, accéder à n'importe quelle ressource de stockage, D₁ à D₃, TL₄, FD₆ ou STOₑ, sans risque de dégradation des performances.

Il s'ensuit aussi que les données d'informations peuvent être réparties de façon optimisée dans les différentes ressources de stockage du système informatique, sur un même site ou sur un site éloigné (figure 4 : STOₑ), dans la mesure où le temps de transmission (figure 6 : T'₂) reste dans des limites acceptables.

La répartition optimisée précitée peut s'effectuer en tenant compte de nombreux critères : performances (vitesses) et/ou capacités des différentes ressources de stockage, types de données, défaillances momentanées d'une ou plusieurs ressources de stockage, en tout ou partie, dépassement de capacité, coût du stockage, etc.

La gestion du stockage distribué est réalisée, comme il a été indiqué, par l'unité d'administration centralisée, en tenant compte de la base de donnée CDB. Celle-ci élabore et télécharge dynamiquement, dans les différentes unités d'administration distribuées, DSM₁ à DSM₆, des agents intelligents de stockage. Les agents de ce type véhiculent des instructions tenant compte, notamment : des conditions locales (type de matériel connecté, capacité de mémoire locale, protocole utilisé, etc.), de l'espace disque virtuel total attribué à un serveur donné, et de l'adresse de l'unité d'administration centralisée ou des unités d'administration distribuée(s) qui gère(nt) la ou les ressource(s) de stockage physique(s). Ces caractéristiques varient en fonction du temps. Aussi, les opérations effectuées sous la commandes des agents sont dynamiques.

De façon pratique, la gestion s'effectue de façon similaire à la gestion d'un réseau local de transmission de données classique. L'unité NSM d'administration centralisée, de ce qui peut être appelé un "réseau" d'unités d'administration distribuées, DSM₁ à DSM₆, peut être concrétisée par une unité de traitement de données telle qu'un serveur sous "UNIX", voire être confondue avec l'unité d'administration du réseau local classique LAN, coexistant avec le bus B.

Outre les agents intelligents de stockage, d'autres types d'agents peuvent être mis en oeuvre avec profit dans le cadre de l'invention.

Un premier type d'agents supplémentaires est constitué par des agents de gestion d'opérations d'entrée-sortie spéciales. Ces agents sont téléchargés dans certains noeuds de stockage, c'est-à-dire pratiquement dans les unités d'administration distribuées associées à ces noeuds, pour obtenir des résultats spécifiques sur les opérations d'entrées-sorties précitées. Il peut s'agir par exemple d'optimiser les temps d'accès à des bases de données.

Un deuxième type d'agents supplémentaires est constitué par des agents organisant des sauvegardes automatiques en fonction d'un certain nombre de paramètres : date, heure, type de données, etc. Ces agents organisent le déplacement de données, par duplication, vers des moyens de stockage de données prédéterminés.

Un troisième type d'agents supplémentaires est constitué par des agents gérant l'archivage et le stockage hiérarchique de données entre les ressources de stockage présentes dans le système. Ils permettent notamment de déplacer les données d'une ressource à l'autre, en tenant compte de contraintes telles que temps d'accès, fréquence d'accès, localisation et coût. Plus particulièrement, un agent spécifique est affecté à l'unité d'administration distribuée DSM₄ attachée aux librairies de bandes ou cartouches magnétiques TL₄, que l'on peut appeler "agent serveur de média". Il apporte une vision virtuelle des objets de stockage physiques et peut accommoder des requêtes d'entrée-sortie formulées par des serveurs externes. Ces derniers ont accès à ces objets de stockage en émettant des requêtes de lecture-écriture classiques, comme s'ils avaient affaire à leurs ressources de stockage locales, par exemple un disque. Grâce à cette disposition, les serveurs d'applications pourront tirer partie de n'importe quelle technologie de stockage de masse, que cette technologie soit actuellement opérationnelle ou en cours d'élaboration, ce sans modification des applications.

Un quatrième type d'agents est constitué par des agents de gestion des moyens d'enregistrement en redondance, en fonction du profil des données, des applications spécifiques et du coût induit, par exemple. Pour des raisons de sécurité, notamment intégrité et disponibilité des données, celles-ci sont enregistrées avec une redondance plus ou moins accentuée, voire dupliquées. On adjoint aussi, aux données utiles d'information, des données de redondance: clés de parité, codes de détection d'erreurs ("EDC" pour "Error-Detection Code") ou de correction d'erreurs ("ECC" pour "Error-Correcting Code"). Ces dispositions conduisent à diverses techniques d'enregistrement : disques dits "miroirs" ou "RAID5", c'est-à-dire avec calcul de clé de parité. Les agents de ce quatrième type gèrent de façon optimisée l'utilisation d'une technique ou d'une autre.

Un cinquième type d'agents est constitué par des agents gérant les connexions avec les sites éloignés de stockage de données STOₑ. Comme il a été indiqué, les liaisons s'effectuant en mode "ATM", il est donc nécessaire d'effectuer une traduction de protocole : "Fibre Channel" à "ATM". L'agent de ce type est téléchargé dans l'unité d'administration distribuée DSM₅, en sus d'autres agents (agents de stockage, etc.).

Un agent d'un sixième type peut être téléchargé dans une des unités d'administration distribuées pour gérer les échanges avec le réseau "INTERNET' et aiguiller les données téléchargées par ce moyen vers une ou plusieurs ressources de stockage du système informatique 1.

Un septième type d'agents est constitué par des agents surveillant et gérant le bon fonctionnement de l'ensemble des ressources de stockage de données.

D'autres types d'agents peuvent être élaborés, en tant que de besoin, par l'unité d'administration centralisée NSM, et télédéchargés sélectivement dans les unités d'administration distribuées, via le bus B. De tels agents sont notamment nécessaires à chaque fois qu'il s'agit de traduire un premier protocole en un second.

Il a été également signalé que, dans les problèmes liés à la sécurité de traitement de données, la confidentialité devait être prise en compte. Cet aspect peut être traité également en faisant appel à des agents spécialisés. Ces agents peuvent vérifier, par exemple, si les requêtes sont légitimes et/ou réservées, en fonction du contenu des données, du profil des utilisateurs ou des ressources accédées.

Dans l'architecture présentée sur la figure 4 coexistent deux bus : un bus local en anneau (dans l'exemple décrit) LAN et un bus spécifique à l'invention, le bus B à haut débit. Selon cette architecture, les communications entre les serveurs de stockage, S₁ à S₃, et les autres unités, par exemple les stations de travail ST₁ à ST₃, s'effectuent de façon classique sous forme de transferts de fichiers, en faisant appel à des protocoles de communication compatibles avec le type de réseau local LAN.

Cependant, comme le bus B, conforme au standard "Fibre Channel", est susceptible de véhiculer plusieurs protocoles, y compris des protocoles de type communication, il est tout-à-fait possible de supprimer le réseau LAN (figure 4) et de faire transiter toutes les transmissions par le seul bus B.

La figure 8 illustre schématiquement une architecture de système informatique 1' ne comportant qu'un seul type de bus, le bus B. Toutes les unités, qu'elles soient ou non spécifiques à l'invention, sont connectées à ce bus B. A titre indicatif, on a représenté sur cette figure 8 un serveur S₁ attaché à un disque local D₁ via une unité d'administration distribuée DSM₁, un deuxième serveur S₇ gérant les communications avec le réseau "INTERNET" I_{T} et connecté au bus B via une unité d'administration distribuée DSM₇, une unité d'administration distribuée DSM₄ attachée à la librairie de bandes ou cartouches magnétiques TL₄, l'unité d'administration centralisée NSM et sa base de données représentée par un disque CDB, ainsi que trois stations de travail, ST₁ à ST₃, désormais connectées directement au bus B. Les stations de travail, ST₁ à ST₃, communiquent entre elles de façon classique, c'est-à-dire en faisant usage d'un protocole de communication. En effet, comme il a été indiqué, les deux types de protocole peuvent coexister sur le bus B. Dans cet esprit, les serveurs, par exemple le serveur S₁ peut être connecté aussi directement au bus B et communiquer avec d'autres unités (par exemple ST₁ à ST₃) sous un protocole de communication, par exemple "TC/IP".

A la lecture de ce qui précède, on constate aisément que l'invention atteint bien les buts qu'elle s'est fixés.

Elle permet notamment d'offrir à chaque serveur une vue virtuelle d'un espace de stockage global. A priori, elle permet à n'importe quel serveur d'accéder à n'importe quelle ressource de stockage du système, ce qu'elle qu'en soit la nature. Elle permet, en outre, d'accéder à des ressources éloignées, sans dégradation substantielle des performances.

Il doit être clair cependant que l'invention n'est pas limitée aux seuls exemples de réalisation précisément décrits, notamment en relation avec les figures 3a à 8. Elle s'accommode de nombreux types de matériels. Ceci est vrai en premier lieu pour les unités centrales de traitement de données, qui peuvent comprendre indifféremment des micro-ordinateurs, des stations de travail, des mini-ordinateurs, ou des ordinateurs de grande puissance du typé dit "main frames". Les systèmes d'exploitation peuvent également être divers et, par exemple, comprendre des systèmes d'exploitation dits universels ou propriétaires. Outre le bus B, il peut être fait usage de réseaux locaux divers : bus (du type "ETHERNET', par exemple) ou en anneau (du type "TOKEN RING", par exemple). Enfin, et surtout, le type de périphériques de stockage n'est pas limité : des unités de disques magnétiques, de disques optiques, de bandes et/ou de cartouches magnétiques, sur site local ou éloigné, peuvent être mises en oeuvre.

## Revendications

1. Système informatique (1) comprenant une pluralité de moyens de stockage de données distribués (D₁-D₃, FD₆, TL₄, STOₑ) et au moins un serveur de stockage desdites données (S₁-S₃),
- des moyens d'attribution à chacun desdits serveurs de stockage de données (S₁-S₃) d'un espace mémoire virtuel (D'_{xyz}) dont l'étendue est au moins égale à la capacité cumulée de tout ou partie desdits moyens de stockage de données distribués (D₁-D₃, FD₆, TL₄, STOₑ) ; **caractérisé en ce que** le système informatique comprend
- une pluralité de moyens d'administration distribués (DSM1 - DSM6) connectés entre eux pour former des moyens de stockage de données locaux dont l'espace mémoire est adressable par un protocole comprenant des instructions d'entrée - sortie de type écriture - lecture émises par ledit serveur de stockage de données (S1 - S3),
dans lequel au moins une partie desdits moyens de stockage de données (D1-D3, FD6, TL4, STOe) sont attachés à un serveur de stockage de données (S1 - S3) par l'intermédiaire desdits moyens d'administration distribués (DSM1 - DSM6),
- lesdits moyens d'administration distribués sont aptes à permettre un aiguillage des instructions d'entrée - sortie émises par ledit serveur de stockage de données (S1- S3) sur l'espace mémoire virtuel (D'_{xyz}), vers un moyen de stockage de données (D1-D3, FD6, TL4, STOe) selon la piste virtuelle adressée de l'espace mémoire virtuel (D'_{xyz}) dudit serveur de stockage de données (S1 - S3).

2. Système selon la revendication 1, **caractérisé en ce que** lesdits moyens d'attribution sont constitués par une série de premiers moyens de traitement de données (DSM₁-DSM₆) à programmes enregistrés, dits moyens d'administration distribués, gérant chacun une partie desdits moyens de stockage de données (D₁-D₃, FD₆, TL₄, STOₑ).

3. Système selon la revendication 1 ou 2, **caractérisé en ce qu'**il comprend en outre des seconds moyens de traitement de données (NSM), dits moyens d'administration centralisés, associés à une base (CDB) de données descriptives d'au moins la configuration desdits moyens de stockage de données (D₁-D₃, FD₆, TL₄, STOₑ), **en ce que** lesdits moyens d'administration centralisés (NSM) comprennent des moyens d'élaboration et de téléchargement des dits programmes à partir desdites données dans lesdits moyens d'administration distribués (DSM₁-DSM₆), de manière à ce que ceux-ci, lorsqu'ils sont associés à un serveur de stockage (S₁-S₃) attribuent à celui-ci, sous la commande dudit programme téléchargé, ledit espace mémoire virtuel (D'_{xyz}).

4. Système selon l'une des revendications 1 à 3, **caractérisé en ce que** lesdits moyens de stockage de données locaux forment une première partition dudit espace mémoire virtuel (O'_{xyz}), et **en ce que** des moyens de stockage externes audit serveur de stockage de données forment au moins une deuxième partition de cet espace mémoire virtuel (O'_{xyz}).

5. Système selon l'une des revendications 1 à 4, **caractérisé en ce qu'**il comprend un bus à haut débit (B) du type comprenant une multitude de ports « entrée-sortie » autorisant la transmission dudit protocole comprenant des instructions d'entrée-sortie de type écriture-lecture, **en ce que** lesdits moyens distribués (DSM₁-DSM₆) et lesdits moyens d'administration centralisés (NSM) sont connectés entre eux par ce bus (B), et **en ce que** lesdites instructions d'entrée-sortie émises par ledit serveur de stockage (S₁-S₃) de données sont aiguillées par lesdits moyens d'administration distribués (DSM₁-DSM₆), sous la commande desdits programmes téléchargés, vers lesdits moyens de stockage locaux formant ladite première partition de l'espace mémoire virtuel (O'_{xyz}), ou, via ledit bus (B), vers des moyens d'administration distribués (DSM₁-DSM₆) attachés auxdits moyens de stockage externes formant une desdites partition supplémentaires de l'espace mémoire virtuelle (O'_{xyz}), selon que lesdites instructions concernent l'une ou l'autre de ces partitions, de manière à rendre directement adressable l'ensemble dudit espace mémoire virtuel (O'xyz) attribué audit serveur de stockage de données (S₁-S₃).

6. Système selon la revendication 5, **caractérisé en ce que** le support de transmission composant ledit bus (8) est une fibre optique monomode et **en ce que** lesdits ports comprennent une multitude de commutateurs de manière à créer des voies de transmission directes à partir de chacun des moyens d'administration connectés vers tous les autres.

7. Système selon l'une des revendications 1 à 6, **caractérisé en ce que** lesdits moyens de stockage comprennent des unités de disques magnétiques (D₁-D₃, FD₆), des unités de bandes ou cartouches magnétiques (TL₄), ou des disques optiques.

8. Système selon l'une des revendications 1 à 7, **caractérisé en ce que** l'un au moins (STOₑ) desdits moyens de stockage de données est localisé sur un site éloigné, **en ce que** les transmissions entre ce site et ledit système informatique (1) s'effectuent par des liaisons (IATM) à grande vitesse, en mode asynchrone, et **en ce que** lesdites liaisons (IATM) sont connectées à un desdits moyens d'administration distribués (DSM₅), ces moyens étant eux-mêmes connectés audit bus (B).

9. Système selon l'une des revendications 1 à 8, **caractérisé en ce qu'**il est configuré de telle sorte que lesdits programmes élaborés par lesdits moyens d'administration centralisés (NSM) sont transmis par ledit bus (8) pour être téléchargés sélectivement dans lesdits moyens d'administration distribués (DSM₁-DSM₆), **en ce que** les programmes sont écrits dans un langage déterminé les rendant auto-exécutables lors dudit téléchargement, et **en ce que** lesdits moyens d'administration centralisés (NSM) gèrent dynamiquement ledit téléchargement en fonction de paramètres évoluant dans le temps et de traitements effectués par ledit système informatique (1).

10. Système selon la revendication 9, **caractérisé en ce que** lesdits programmes téléchargés comprennent des programmes de gestion de l'espace mémoire virtuel (D'_{xyz}) attribué à chaque serveur de stockage (S₁-S₃).

11. Système selon la revendication 9, **caractérisé en ce que** lesdits moyens de stockage de données (D₁-D₃, FD₆, TL₄, STOₑ) étant de nature hétérogène et fonctionnant selon des modes et/ou protocoles différents, lesdits programmes téléchargés comprennent des programmes de traduction de mode et/ou protocole, de manière à ce que chaque serveur de stockage (S₁-S₃) accède audit espace mémoire virtuel (O'xyz) qui lui est attribué en mettant en oeuvre ses propres protocoles.

12. Système selon la revendication 9, **caractérisé en ce que** lesdits programmes téléchargés comprennent des programmes d'archivage automatique de données, selon une hiérarchie déterminée, dans les moyens de stockage de données distribués (D₁-D₃, FD₆, TL₄, STOₑ).

13. Système selon la revendication 9, **caractérisé en ce que** lesdits programmes téléchargés comprennent des programmes de sauvegarde de données par stockage de celles-ci selon un schéma redondant déterminé.

14. Système selon la revendication 9, **caractérisé en ce que**, l'un au moins (STOₑ) desdits moyens de stockage de données étant localisé sur un site éloigné, **en ce que** les transmissions entre ce site et ledit système informatique s'effectuent par des liaisons à grande vitesse (IATM)' en mode asynchrone, lesdits programmes téléchargés comprennent des programmes de traduction de protocole de transmission de données, et **en ce que** ces programmes sont téléchargés dans des moyens d'administration distribués (DSM₅) formant interface entre ledit bus (B) et lesdites liaisons (IATM) en mode asynchrone.

15. Système selon l'une des revendications 1 à 13, **caractérisé en ce que** au moins une partie desdits moyens d'administration distribués (DSM₁-DSM₆) font partie intégrante du serveur de stockage de données (S₁-S₃) ou desdits moyens de stockage de données distribués (D₁-D₃, FD₆, TL₄, STOₑ), avec lesquels ils sont associés pour former une unité logique de ceux-ci.

16. Système selon l'une des revendications 1 à 15, **caractérisé en ce qu'**il comprend des unités de traitement de données supplémentaires (ST₁-ST₃), un réseau local (LAN) et des moyens de connexion dudit système informatique (1) à un réseau de transmission de données externe (IT) et **en ce que** lesdites unités supplémentaires (ST₁-ST₃), lesdits moyens de connexion et lesdits serveurs de stockage de données (S₁-S₃) sont connectés audit réseau local (LAN).

17. Système selon la revendication 16, **caractérisé en ce que** ledit bus (8) et ledit réseau local (LAN) sont confondus en un réseau de transmission de données unique (8), lesdites unités supplémentaires (ST₁-ST₃) étant connectées audit bus (B) et communiquant entre elles selon un protocole de communication via ce bus (B).

## Claims

1. Data processing system (1) comprising a plurality of distributed data storage means (D₁-D₃, FD₆, TL₄, STOₑ) and at least one server for storing said data (S₁-S₃),
- means for allocating, to each of said data storage servers (S₁-S₃), a virtual memory space (D'_{xyz}), the extent of which is at least equal to the accumulated capacity of all or part of said distributed data storage means (D₁-D₃, FD₆, TL₄, STOₑ); **characterised in that** the data processing system comprises:
- a plurality of distributed management means (DSM₁-DSM₆) connected together to form local data storage means, the memory space of which is addressable by a protocol comprising input-output instructions of the read-write type sent by said data storage server (S₁-S₃),
in which at least part of said data storage means (D₁-D₃, FD₆, TL₄, STOₑ) are attached to a data storage server (S₁-S₃) via said distributed management means (DSM₁-DSM₆),
- said distributed management means are capable of allowing routing of the input-output instructions sent by said data storage server (S₁-S₃) over the virtual memory space (D'_{xyz}), to a data storage means (D₁-D₃, FD₆, TL₄, STOₑ) along the addressed virtual path of the virtual memory space (D'_{xyz}) of said data storage server (S₁-S₃),

2. System according to Claim 1, **characterised in that** said allocation means are constituted by a series of first data processing means (DSM₁-DSM₆) with recorded programs, known as distributed management means, each managing a part of said data storage means (D₁-D₃, FD₆, TL₄, STOₑ).

3. System according to Claim 1 or 2, **characterised in that** it further comprises second data processing means (NSM), known as centralised management means, associated with a data base (CDB) of data describing at least the configuration of said data storage means (D₁-D₃, FD₆, TL₄, STOₑ), **in that** said centralised management means (NSM) comprise means for developing and downloading said programs from said data to said distributed management means (DSM₁-DSM₆), in such a way that the latter, when they are associated with a storage server (S₁-S₃) allocate said virtual memory space (D'_{xyz}) to said storage server (S₁-S₃), under the control of said downloaded program.

4. System according to one of Claims 1 to 3, **characterised in that** said local data storage means form a first partition of said virtual memory space (O'_{xyz}) and **in that** storage means external to said data storage server form at least a second partition of this virtual memory space (O'_{xyz}).

5. System according to one of Claims 1 to 4, **characterised in that** it comprises a high-speed bus (B) of the type comprising a multitude of "input-output" ports allowing the transmission of said protocol comprising input-output instructions of the read-write type, **in that** said distributed means (DSM₁-DSM₆) and said centralised management means (NSM) are connected together by this bus (8), and **in that** said input-output instructions sent by said data storage server (S₁-S₃) are routed by said distributed management means (DSM₁-DSM₆), under the control of said downloaded programs, towards said local storage means forming said first partition of the virtual memory space (O'_{xyz}), or, via said bus (B), towards distributed management means (DSM₁-DSM₆) attached to said external storage means forming one of said additional partitions of the virtual memory space (O'_{xyz}), depending on whether said instructions relate to one or the other of these partitions, so as to make the whole of said virtual memory space (O'_{xyz}), allocated to said data storage server (S₁-S₃), directly addressable.

6. System according to Claim 5, **characterised in that** the transmission medium composing said bus (8) is a single-mode optical fibre and **in that** said ports comprise a multitude of switches so as to create direct transmission channels from each of the connected management means to all the others.

7. System according to one of Claims 1 to 6, **characterised in that** said storage means comprise magnetic disk units (D₁-D₃, FD₆), magnetic cartridge or tape units (TL₄), or optical disks.

8. System according to one of Claims 1 to 7, **characterised in that** at least one (STOₑ) of said data storage means is located on a remote site, **in that** the transmissions between that site and said data processing system (1) are carried out by high-speed links (I_{ATM}), in asynchronous mode, and **in that** said links (IATM) are connected to one of said distributed management means (DSM₅), these means being themselves connected to said bus (B).

9. System according to one of Claims 1 to 8, **characterised in that** it is configured in such a way that said programs developed by said centralised management means (NSM) are transmitted via said bus (8) so as to be downloaded selectively to said distributed management means (DSM₁-DSM₆), **in that** the programs are written in a predetermined language making them auto-executable at the time of said downloading, and **in that** said centralised management means (NSM) dynamically manage said downloading as a function of parameters evolving over time and as a function of processing carried out by said data processing system (1).

10. System according to Claim 9, **characterised in that** said downloaded programs comprise programs for managing the virtual memory space (O'_{xyz}) allocated to each storage server (S₁-S₃).

11. System according to Claim 9, **characterised in that**, said data storage means (D₁-D₃, FD₆, TL₄, STOₑ) being heterogeneous in nature and operating according to different modes and/or protocols, said downloaded programs comprise mode and/or protocol translation programs, so that each storage server (S₁-S₃) accesses said virtual memory space (O'_{xyz}) that is allocated to it while implementing its own protocols.

12. System according to Claim 9, **characterised in that** said downloaded programs comprise programs for automatically archiving data, according to a predetermined hierarchy, in the distributed data storage means (D₁-D₃, FD₆, TL₄, STOₑ).

13. System according to Claim 9, **characterised in that** said downloaded programs comprise programs for backing up data by storing the latter according to a predetermined redundant scheme.

14. System according to Claim 9, **characterised in that**, at least one (STOₑ) of said data storage means being located on a remote site, **in that** the transmissions between this site and said data processing system take place via high-speed links (IATM) in asynchronous mode, said downloaded programs comprise data transmission protocol translation programs, and **in that** these programs are downloaded to distributed management means (DSM₅) forming an interface between said bus (B) and said links (IATM) in asynchronous mode.

15. System according to one of Claims 1 to 13, **characterised in that** at least part of said distributed management means (DSM₁-DSM₆) forms an integral part of the data storage server (S₁-S₃) or of said distributed data storage means (D₁-D₃, FD₆, TL₄, STOₑ), with which they are associated, so as to form a logical unit thereof,

16. System according to one of Claims 1 to 15, **characterised in that** it comprises additional data processing units (ST₁-ST₃), a local area network (LAN) and means for connecting said data processing system (1) to an external data transmission network (IT) and **in that** said additional units (ST₁-ST₃), said connection means and said data storage servers (S₁-S₃) are connected to said local area network (LAN),

17. System according to Claim 16, **characterised in that** said bus (8) and said local area network (LAN) are merged into a single data transmission network (8), said additional units (ST₁-ST₃) being connected to said bus (B) and communicating between themselves according to a communication protocol via this bus (B).

## Patentansprüche

1. Informatik-System (1), das eine Mehrzahl von verteilten Datenspeicher-Mitteln (D₁-D₃, FD₆, TL₄, STOₑ) und mindestens einen Server (S₁-S₃) zum Speichern der genannten Daten enthält,
- Mittel, die jedem der genannten Datenspeicher-Server (S₁-S₃) einen virtuellen Speicherplatz (D'xyz) zuweisen, dessen Größe mindestens gleich der summierten, Kapazität aller oder eines Teils der genannten, verteilten Datenspeicher-Mittel (D₁-D₃, FD₆, TL₄, STOₑ) ist; **dadurch gekennzeichnet, dass** das Informatik-System enthält
- eine Mehrzahl von verteilten Administrations-Mitteln (DSM1 - DSM6), die untereinander verbunden sind, um lokale Datenspeicher-Mittel zu bilden, deren Speicherplatz durch ein Protokoll adressierbar ist, das Eingangs-Ausgangs-Anweisungen vom Typ Schreiben-Lesen enthält, die vom genannten Datenspeicher-Server (S1 - S3) ausgesendet werden,
in dem mindestens ein Teil der genannten Datenspeicher-Mittel (D₁-D₃, FD₆, TL₄, STOₑ) an einen Datenspeicher-Server (S1 - S3) angebunden ist über die genannten, verteilten Administrations-Mittel (DSM1 - DSM6),
- die genannten, verteilten Administrations-Mittel sind fähig, Eingangs-Ausgangs-Anweisungen, die vom genannten Datenspeicher-Server (S1 - S3) auf dem virtuellen Speicherplatz (D'xyz) ausgesendet werden, umzuleiten zu einem Datenspeicher-Mittel (D₁-D₃, FD₆, TL₄, STOₑ) entsprechend der adressierten virtuellen Bahn des virtuellen Speicherplatzes (D'xyz) des genannten Datenspeicher-Servers (S1 - S3).

2. System nach Anspruch 1, **dadurch gekennzeichnet, dass** die genannten Zuteilungs-Mittel aus einer Reihe von ersten Datenverarbeitungs-Mitteln (DSM₁ - DSM₆) mit gespeicherten Programmen bestehen, verteilte Administrations-Mittel genannt, die jeweils einen Teil der genannten Datenspeicher-Mittel (D₁-D₃, FD₆, TL₄, STOₑ) verwalten.

3. System nach Anspruch 1 oder 2, **dadurch gekennzeichnet, dass** es ferner zweite Datenverarbeitungs-Mittel (NSM) enthält, zentrale Administrations-Mittel genannt, zugeordnet zu einer Datenbasis (CDB) zur Beschreibung mindestens der Konfiguration der genannten Datenspeicher-Mittel (D₁-D₃, FD₆, TL₄, STOₑ), und **dadurch**, dass die genannten, zentralen Administrations-Mittel (NSM) Mittel enthalten zur Erstellung und zum Herunterladen der genannten Programme anhand der genannten Daten in die genannten, verteilten Administrations-Mittel (DSM₁ - DSM₆), derart, dass diese, wenn sie- einem Speicher-Server (S₁ - S₃) zugeordnet sind, diesem unter dem Befehl des genannten, heruntergeladenen Programms den genannten, virtuellen Speicherplatz (D'xyz) zuteilen.

4. System nach einem der Ansprüche 1 bis 3, **dadurch gekennzeichnet, dass** die genannten, lokalen Datenspeicher-Mittel eine erste Partition des genannten, virtuellen Speicherplatzes (O'xyz) formen, und **dadurch**, dass zum genannten Datenspeicher-Server externe Speicher-Mittel mindestens eine zweite Partition dieses virtuellen Speicherplatzes (O'xyz) formen.

5. System nach einem der Ansprüche 1 bis 4, **dadurch gekennzeichnet, dass** es einen Bus (B) mit hohem Durchsatz enthält, von der Art, die eine Mehrzahl enthält von "Eingangs-Ausgangs"-Anschlüssen, die die Übertragung des genannten Protokolls autorisieren, das Eingangs-Ausgangs-Anweisungen vom Typ Schreiben-Lesen enthält, und **dadurch**, dass die genannten, verteilten Administrations-Mittel (DSM₁ - DSM₆) und die genannten, zentralen Administrations-Mittel (NSM) untereinander über diesen Bus (B) verbunden sind, und **dadurch**, dass die genannten Eingangs-Ausgangs-Anweisungen, die vom genannten Datenspeicher-Server (S₁ - S₃) ausgesendet werden, von den genannten, verteilten Administrations-Mitteln (DSM₁ - DSM₆) unter dem Befehl der genannten, heruntergeladenen Programme umgeleitet werden zu den genannten, lokalen Speichermitteln, die die genannte, erste Partition des virtuellen Speicherplatzes (O'xyz) formen, oder, über den genannten Bus (B), zu den verteilten Administrations-Mitteln (DSM1 - DSM6), verbunden mit den genannten, externen Speichermitteln, die eine der genannten, zusätzlichen Partitionen des virtuellen Speicherplatzes (O'xyz) formen, je nach dem, ob die genannten Anweisungen die eine oder die andere dieser Partitionen betreffen, derart, dass die Gesamtheit des genannten, virtuellen Speicherplatzes (O'xyz), der dem Datenspeicher-Server (S₁ - S₃) zugeteilt ist, direkt adressierbar gemacht wird.

6. System nach Anspruch 5, **dadurch gekennzeichnet, dass** das Übertragungs-Medium, das den genannten Bus (8) bildet, eine optische Monomode-Faser ist, und **dadurch**, dass die genannten Anschlüsse eine Mehrzahl von Umschaltern enthalten, derart, dass ein direkter Übertragungs-Weg ausgehend von jedem der Administrations-Mittel zu jedem anderen geschaffen wird.

7. System nach einem der Ansprüche 1 bis 6, **dadurch gekennzeichnet, dass** die genannten Speichermittel Einheiten von magnetischen Platten (D₁ - D₃, FD₆)' enthalten, Einheiten von magnetischen Bändern oder Kassetten (TL4), oder optische Platten.

8. System nach einem der Ansprüche 1 bis 7, **dadurch gekennzeichnet, dass** sich mindestens eines der genannten Datenspeicher-Mittel (STOₑ) an einer entfernten Stelle befindet, und **dadurch**, dass die Übertragungen zwischen dieser Stelle und dem genannten Informatik-System (1) über Hochgeschwindigkeits-Verbindungen (IATM) stattfinden, in asynchroner Weise, und **dadurch**, dass die genannten Verbindungen (IATM) mit einem der genannten, verteilten Administrations-Mittel (DSM₅) verbunden sind, wobei diese Mittel selbst mit dem genannten Bus (B) verbunden sind.

9. System nach einem der Ansprüche 1 bis 8, **dadurch gekennzeichnet, dass** es so konfiguriert ist, dass die genannten Programme, die von den genannten, zentralisierten Administrations-Mittel (NSM) erstellt werden, über den genannten Bus (8) übertragen werden, um selektiv in den genannten, verteilten Administrations-Mitteln (DSM₁ - DSM₆) heruntergeladen zu werden, und **dadurch**, dass die Programme in einer bestimmten Sprache geschrieben sind, die sie beim genannten Herunterladen selbstausführbar macht, und **dadurch**, dass die genannten, zentralisierten Administrations-Mittel (NSM) das genannte Herunterladen dynamisch verwalten in Abhängigkeit von Parametern, die sich mit der Zeit entwickeln, und von Verarbeitungen, die vom genannten Informatik-System (1) ausgeführt werden.

10. System nach Anspruch 9, **dadurch gekennzeichnet, dass** die genannten, heruntergeladenen Programme Programme enthalten zur Verwaltung des virtuellen Speicherplatzes (D'xyz), der jedem Speicher-Server (S₁ - S₃) zugeteilt ist.

11. System nach Anspruch 9, **dadurch gekennzeichnet, dass** die genannten Datenspeicher-Mittel (D₁ - D₃, FD₆, TL₄, STOₑ) von heterogener Natur sind und mit verschiedenen Modi und/oder Protokollen funktionieren, wobei die genannten, heruntergeladenen Programme Programme zum Übersetzen des Modus und/oder des Protokolls enthalten, derart, dass jeder Speicher-Server (S1 - S3) unter Einsatz seiner eigenen Protokolle auf den genannten, virtuellen Speicherplatz (O'xyz), der ihm zugeteilt ist, zugreift.

12. System nach Anspruch 9, **dadurch gekennzeichnet, dass** die genannten, heruntergeladenen Programme Programme enthalten zum automatischen Archivieren von Daten, in den verteilten Datenspeicher-Mitteln (D₁ - D₃, FD₆, TL₄, STOₑ), nach einer bestimmten Hierarchie.

13. System nach Anspruch 9, **dadurch gekennzeichnet, dass** die genannten, heruntergeladenen Programme Programme enthalten zum Sicherheitskopieren von Daten durch Speichern von diesen nach einem bestimmten, redundanten Schema.

14. System nach Anspruch 9, **dadurch gekennzeichnet, dass** mindestens eines der genannten Datenspeicher-Mittel (STOₑ) an einer entfernten Stelle liegt, und **dadurch**, dass die Übertragungen zwischen dieser Stelle und dem genannten Informatik-System über Hochgeschwindigkeits-Verbindungen (IATM)' in asynchroner Weise erfolgen, wobei die genannten, heruntergeladenen Programme Programme enthalten zum Übersetzen von Datenübertragungs-Protokollen, und **dadurch**, dass diese Programme in verteilte Administrations-Mittel (DSM₅) heruntergeladen werden, die eine Schnittstelle formen zwischen dem genannten Bus (B) und den genannten, asynchronen Verbindungen (IATM).

15. System nach einem der Ansprüche 1 bis 13, **dadurch gekennzeichnet, dass** mindestens ein Teil der genannten, verteilten Administrations-Mittel (DSM₁ - DSM₆) einen integralen Teil des Datenspeicher-Servers (S₁ - S₃) oder der genannten, verteilten Datenspeicher-Mittel (D₁ - D₃, FD₆, TL₄, STOₑ) bilden, denen sie zugeordnet sind, um eine logische Einheit dieser zu formen.

16. System nach einem der Ansprüche 1 bis 15, **dadurch gekennzeichnet, dass** es zusätzliche Einheiten zur Datenverarbeitung (ST₁ - ST₃) enthält, ein lokales Netzwerk (LAN) und Mittel zur Anbindung des genannten Informatik-Systems (1) an ein externes Daten-Übertragungsnetzwerks (IT), und **dadurch**, dass die genannten, zusätzlichen Einheiten (ST₁ - ST₃), die genannten Anbindungs-Mittel und die genannten Datenspeicher-Server (S₁ - S₃) mit dem genannten, lokalen Netzwerk (LAN) verbunden sind.

17. System nach Anspruch 16, **dadurch gekennzeichnet, dass** der genannte Bus (8) und das genannte, lokale Netzwerk (LAN) zusammengefasst sind in ein einziges Datenübertragungs-Netzwerk (8), wobei die genannten, zusätzlichen Einheiten (ST₁ - ST₃) mit dem genannten Bus (B) verbunden sind und untereinander nach einem Kommunikations-Protokoll über diesen Bus (B) kommunizieren.
